# EUROPEAN PATENT APPLICATION

(11) **EP 3 805 016 A1**
(43) Date of publication of application: **14.04.2021**
(21) Application number: 19810335.0
(22) Date of filing: 29.05.2019
(51) Int. Cl.: B60C 9/18, B60C 9/22

(54) **PNEUMATIC TIRE**

(30) Priority: 31.05.2018 JP 2018105507
(71) Applicant: Bridgestone Corporation, Chuo-Ku Tokyo 104-8340 (JP)
(72) Inventor: KOBAYASHI, Taichi, Tokyo 104-8340 (JP)
(74) Representative: Oxley, Robin John George
(86) International application number: PCT/JP2019/021235
(87) International publication number: WO 2019/230770

(57) **Abstract**

A pneumatic tire according to the present disclosure is a pneumatic tire comprising an annular rubber-coated belt including a cord and a coating rubber with which the cord is coated, and comprises a resin layer located inside or outside the rubber-coated belt in a tire radial direction, and having an elastic modulus larger than an elastic modulus of the coating rubber, and a cushion material interposed in at least a space between an outer end of one of the rubber-coated belt and the resin layer in a tire width direction and the other one of the rubber-coated belt and the resin layer, and having an elastic modulus smaller than the elastic modulus of the coating rubber.

## Description

### TECHNICAL FIELD

The present disclosure relates to a pneumatic tire.

### BACKGROUND

Heretofore, a pneumatic tire has been known in which a belt comprising an inclined belt including a metal cord inclined in a tire circumferential direction and a circumferential belt including a metal cord extending along the tire circumferential direction is disposed outside a carcass disposed to straddle between bead portions in a tire radial direction.

In PTL 1, a tire for a passenger vehicle is disclosed in which a crown reinforcing member comprises three separate elements. The crown reinforcing member of the tire for the passenger vehicle in PTL 1 is constituted of three separate elements comprising a carcass, a crown belt including a reinforcing element parallel to a tire circumferential direction, and a crown triangular structure forming layer including a reinforcing element forming an angle from 10° to 80° to the tire circumferential direction.

### CITATION LIST

### Patent Literature

PTL 1: Japanese Translation of PCT International Application Publication No. 2012-523340

### SUMMARY

### (Technical Problem)

According to a tire described in PTL 1, a part of a belt layer including a cord is formed as a resin layer made of a polymer or the like, so that the tire can be reduced in weight. In the tire disclosed in PTL 1, however, an end portion of a crown belt in a tire width direction as a rubber-coated belt coated with a rubber is located, in the tire width direction, inside an end portion of a crown triangular structure forming layer as the resin layer in the tire width direction, and hence distortion is easy to be concentrated on the crown triangular structure forming layer as the resin layer, at a position of the end portion of the crown belt as the rubber-coated belt in the tire width direction. Consequently, for example, the crown triangular structure forming layer is cracked. Thus, the crown triangular structure forming layer is easily damaged, and hence there is room for further improvement in terms of durability of the tire of PTL 1.

On the other hand, in the tire disclosed in PTL 1, a configuration is contrived where the end portion of the crown belt as the rubber-coated belt in the tire width direction is located, in the tire width direction, outside the end portion of the crown triangular structure forming layer as the resin layer in the tire width direction. However, in this configuration, distortion is easy to be concentrated on the crown belt as the rubber-coated belt at a position of the end portion of the crown triangular structure forming layer as the resin layer in the tire width direction. Thus, a coating rubber on the crown belt is easily damaged, and there is still room for improvement in terms of the durability of the tire.

An object of the present disclosure is to provide a pneumatic tire in which damages on a rubber-coated belt and a resin layer are inhibited, and durability can be accordingly improved.

### (Solution to Problem)

A pneumatic tire according to a first aspect of the present disclosure is a pneumatic tire comprising an annular rubber-coated belt including a cord and a coating rubber with which the cord is coated, the pneumatic tire comprising a resin layer located inside or outside the rubber-coated belt in a tire radial direction, and having an elastic modulus larger than an elastic modulus of the coating rubber, and a cushion material interposed in at least a space between an outer end of one of the rubber-coated belt and the resin layer in a tire width direction and the other one of the rubber-coated belt and the resin layer, and having an elastic modulus smaller than the elastic modulus of the coating rubber.

### (Advantageous Effect)

According to the present disclosure, a pneumatic tire can be provided in which damages on a rubber-coated belt and a resin layer are inhibited, and durability can be accordingly improved.

### BRIEF DESCRIPTION OF THE DRAWINGS

In the accompanying drawings:
FIG. 1 is a cross-sectional view of a tire of an embodiment, in a cross section parallel to a tire width direction; and
FIG. 2 is an enlarged cross-sectional view in which a part of the tire illustrated in FIG. 1 is enlarged.

### DETAILED DESCRIPTION

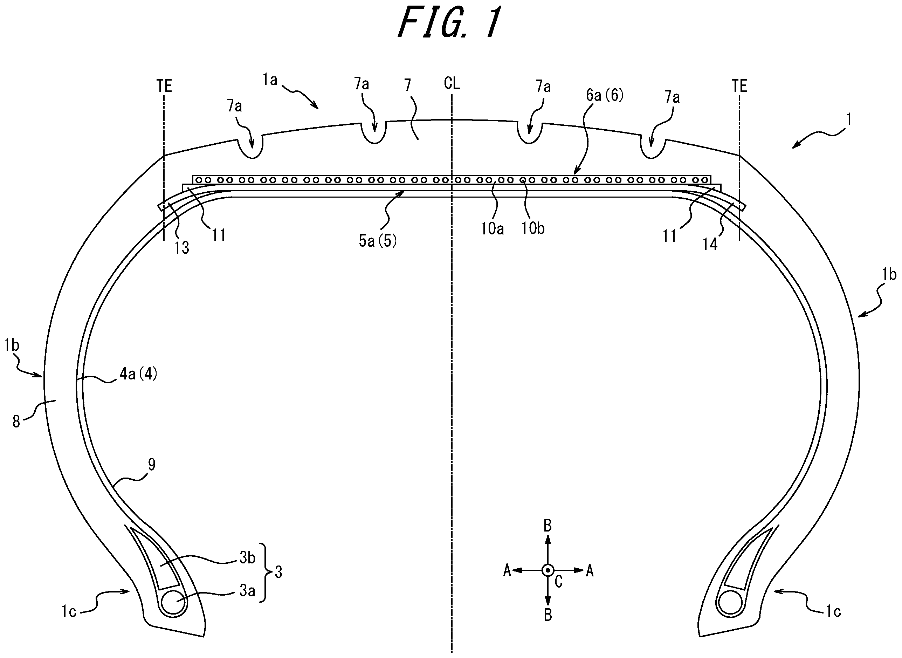

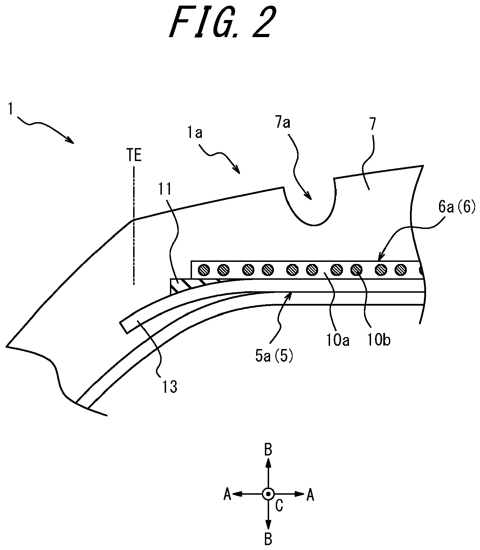

Hereinafter, description will be made as to an embodiment of a pneumatic tire according to the present disclosure with reference to FIG. 1 and FIG. 2. In each drawing, common members and regions are denoted with the same reference signs.

Hereinafter, it is considered that a dimension of each element, a length relationship between respective elements, a positional relation therebetween, and the like are measured in a reference state where a pneumatic tire is assembled to an applicable rim, filled with a prescribed internal pressure and unloaded, unless otherwise mentioned.

Here, an "applicable rim" indicates an approved rim (a measuring rim in Standards Manual of ETRTO, and a design rim in Year Book of TRA) in an applicable size described or to be described in the future in an industrial standard effective in a district where the pneumatic tire is produced and used, for example, JATMA Year Book of JATMA (the Japan Automobile Tyre Manufacturers Association) in Japan, Standards Manual of ETRTO (the European Tyre and Rim Technical Organization) in Europe, Year Book of TRA (the Tire and Rim Association, Inc.) in U.S. or the like (that is, the above "applicable rim" also includes a size that can be included in the above industrial standard in the future, in addition to the existing size. Examples of "the size to be described in the future" include sizes described as "future developments" in the 2013 edition of Standards Manual of ETRTO). However, it is considered that a rim having a size that is not described in the above industrial standard is a rim having a width corresponding to a bead width of the pneumatic tire. Furthermore, "the prescribed internal pressure" refers to an air pressure (a maximum air pressure) corresponding to a maximum load capability of a single wheel in an applicable size and ply rating described in Year Book of JATMA described above, or the like. The prescribed internal pressure having a size that is not described in the above industrial standard refers to an air pressure (the maximum air pressure) corresponding to the maximum load capability prescribed for each vehicle to which the tire is assembled. Additionally, "the maximum load" that will be described later refers to a load corresponding to the above tire maximum load capability of the standard of JATMA or the like among tires having the applicable size, or the maximum load having a size that is not described in the above industrial standard means a load corresponding to the maximum load capability prescribed for each vehicle to which the tire is assembled.

FIG. 1 is a view illustrating a pneumatic tire 1 (hereinafter referred to simply as "the tire 1") as an embodiment of the present disclosure. FIG. 1 is a cross-sectional view of the tire 1, in a cross section parallel to a tire width direction A. Hereinafter, this cross section will be described as "the tire width direction cross section". Furthermore, FIG. 2 is an enlarged cross-sectional view in which a part of the tire 1 illustrated in FIG. 1 is enlarged. Note that the tire 1 of the present embodiment has a configuration symmetric to a tire equatorial plane CL, but may have a configuration asymmetric to the tire equatorial plane CL.

As illustrated in FIG. 1, the tire 1 comprises a tread portion 1a, a pair of sidewall portions 1b extending from opposite end portions of the tread portion 1a in the tire width direction A to an inner side in a tire radial direction B, and a pair of bead portions 1c provided in end portions inside the respective sidewall portions 1b in the tire radial direction B. The tire 1 of the present embodiment is a radial tire for a tubeless type of passenger vehicle. Here, "the tread portion 1a" means a portion sandwiched between tread edges TE on opposite sides in the tire width direction A. Furthermore, each of "the bead portions 1c" means a portion where a bead member 3 described later is located in the tire radial direction B. Then, each of "the sidewall portions 1b" means a portion between the tread portion 1a and the bead portion 1c. Note that each of "the tread edges TE" means a position of a contact patch on an outermost side in the tire width direction in a state where the tire is mounted to the above applicable rim, filled with the above prescribed internal pressure, and loaded with the maximum load.

The tire 1 comprises the bead member 3, a carcass 4, a resin layer 5, a rubber-coated belt 6, a tread rubber 7, a side rubber 8, an inner liner 9, and a cushion material 11.

### [Bead Member 3]

The bead member 3 is embedded in the bead portion 1c. The bead member 3 comprises a bead core 3a, and a bead filler 3b made of a rubber and located outside the bead core 3a in the tire radial direction B. The bead core 3a comprises a plurality of bead wires having a periphery coated with the rubber. Each bead wire is formed of a steel cord. The steel cord may comprise, for example, a steel monofilament or stranded wire.

### [Carcass 4]

The carcass 4 straddles between the pair of bead portions 1c, more specifically between the bead cores 3a of the pair of bead members 3, and extends toroidally. Furthermore, the carcass 4 includes at least a radial structure.

Furthermore, the carcass 4 is constituted of one or more (one in the present embodiment) carcass plies 4a in which a carcass cord is disposed at an angle, for example, from 75° to 90° in a tire circumferential direction C (see FIG. 1 or the like). This carcass ply 4a comprises a ply main body located between the pair of bead cores 3a, and a ply folded portion folded from an inner side to an outer side in the tire width direction A around the bead core 3a, at each end of this ply main body. Furthermore, the bead filler 3b extending from the bead core 3a to the outer side in the tire radial direction B in a tapered state is disposed between the ply main body and the ply folded portion. As the carcass cord that forms the carcass ply 4a, in the present embodiment, a polyester cord is employed. Alternatively, an organic fiber cord made of nylon, rayon, aramid or the like may be used, or a metal cord made of steel may be employed as required. Furthermore, a number of the carcass plies 4a may be two or more.

### [Resin Layer 5]

The resin layer 5 is located inside the rubber-coated belt 6 described later in the tire radial direction B, in the tread portion 1a. Also, the resin layer 5 is located outside a crown portion of the carcass 4 in the tire radial direction B. The resin layer 5 of the present embodiment is constituted of a resin annular body 5a extending continuously over an entire area in the tire circumferential direction C. The resin annular body 5a as the resin layer 5 can be formed, for example, by joining a first annular portion made of a resin and located on one side in the tire width direction A, and a second annular portion made of a resin and located on the other side in the tire width direction A, at a position of the tire equatorial plane CL through welding.

Furthermore, the resin layer 5 does not comprise any cords, differently from the rubber-coated belt 6 described later. That is, any cords are not arranged in the resin layer 5.

As the resin that forms the resin layer 5, for example, a thermoplastic elastomer or a thermoplastic resin may be used. Alternatively, a resin that causes crosslinking by heat or electron beams, or a resin that cures by thermal dislocation may be used. Note that the resin that forms the resin layer 5 does not include a rubber (an organic polymer substance exhibiting rubber elasticity at normal temperature).

Examples of the thermoplastic elastomer include polyolefin thermoplastic elastomer (TPO), polystyrene thermoplastic elastomer (TPS), polyamide thermoplastic elastomer (TPA), polyurethane thermoplastic elastomer (TPU), polyester thermoplastic elastomer (TPC), and dynamic crosslinking thermoplastic elastomer (TPV). Furthermore, examples of the thermoplastic resin include polyurethane resin, polyolefin resin, vinyl chloride resin, and polyamide resin. Furthermore, as the thermoplastic resin, for example, a thermoplastic resin may be used in which a deflection temperature under load (under a load of 0.45 MPa) prescribed in ISO75-2 or ASTM D648 is 78°C or more, a tensile yield strength prescribed in JIS K7113 is 10 MPa or more, a tensile rupture elongation similarly prescribed in JIS K7113 is 50% or more, and a Vicat softening temperature (a method A) prescribed in JIS K7206 is 130°C or more.

Note that the resin layer 5 has an elastic modulus larger than that of a coating rubber 10a described later in the rubber-coated belt 6. "The elastic modulus" described herein means a tensile elastic modulus. The elastic modulus of the resin layer needs to be larger than the elastic modulus of the coating rubber, and the elastic modulus of the resin layer 5 can be set to a range from 100 MPa to 1000 MPa, more preferably a range from 200 MPa to 700 MPa. Furthermore, a thickness of the resin layer 5 is set to a range from 0.1 mm to 5.0 mm, more preferably a range from 0.3 mm to 3.5 mm. Measurement of the tensile elastic modulus is performed in conformity with JIS K7113: 1995. Specifically, the measurement of the tensile elastic modulus is performed by using Shimadzu Autograph AGS-J (5KN) manufactured by Shimadzu Corporation, and setting a tensile speed to 100 mm/min. Note that in a case of measuring the tensile elastic modulus of the resin layer, the resin layer may be punched to prepare a measurement sample. Alternatively, for example, a measurement sample made of the same material as in the resin layer may be separately prepared, and the elastic modulus may be measured.

The resin layer 5 of the present embodiment extends to an outer side of the rubber-coated belt 6 described later, in the tire width direction A. Furthermore, the resin layer 5 of the present embodiment is located inside the rubber-coated belt 6 in the tire radial direction B. This respect will be described later in detail.

### [Rubber-Coated Belt 6]

The rubber-coated belt 6 is disposed outside the resin annular body 5a as the resin layer 5 in the tire radial direction B. Furthermore, the rubber-coated belt 6 comprises a cord 10b coated with the coating rubber 10a. Specifically, the rubber-coated belt 6 of the present embodiment comprises one or more (one in the present embodiment) belt layers arranged outside the crown portion of the carcass 4 and the resin annular body 5a as the resin layer 5 in the tire radial direction B. More specifically, as illustrated in FIG. 1, the rubber-coated belt 6 of the present embodiment is constituted of a circumferential belt 6a comprising only one circumferential belt layer.

The circumferential belt 6a as the rubber-coated belt 6 of the present embodiment is a spiral belt formed in a state where a steel cord as a metal belt cord is spirally wound around a tire central axis along the tire circumferential direction C (see FIG. 1 or the like) (at an angle of 10° or less, preferably 5° or less, more preferably 2° or less in the tire circumferential direction C). More specifically, the circumferential belt 6a as the rubber-coated belt 6 of the present embodiment is formed by a rubber-coated cord comprising the cord 10b such as a steel cord coated with the coating rubber 10a. That is, the circumferential belt 6a as the rubber-coated belt 6 is constituted of the rubber-coated cord in a state of being spirally wound around an outer surface of the resin annular body 5a in the tire radial direction B, over an area between after-mentioned reduced-diameter portions 13 and 14 of opposite end portions of the resin annular body 5a as the resin layer 5 in the tire width direction A.

The rubber-coated cord is joined to the outer surface of the resin annular body 5a as the resin layer 5 in the tire radial direction B while being wound around the outer surface of the resin annular body 5a in the tire radial direction B. In the present embodiment, the coating rubber 10a of the rubber-coated cord and the resin annular body 5a are welded, to join the rubber-coated cord and the resin annular body 5a. Additionally, the joining of the coating rubber 10a of the rubber-coated cord and the resin annular body 5a is not limited to the welding, and may be performed by bonding with an adhesive or the like.

Furthermore, in the rubber-coated cord, portions adjacent to each other in the tire width direction A are joined. In the present embodiment, the portions of the rubber-coated cord that are adjacent to each other in the tire width direction A are joined by welding the coating rubber 10a. However, the joining of the portions of the rubber-coated cord that are adjacent to each other in the tire width direction A is not limited to the welding, and may be performed by bonding with an adhesive or the like.

Note that the rubber-coated belt 6 of the present embodiment has a cylindrical shape with an almost constant outer diameter regardless of a position thereof in the tire width direction A. More specifically, a thickness of the rubber-coated belt 6 of the present embodiment is almost constant regardless of the position in the tire width direction A, and the thickness may be set to, for example, a range from 1.0 mm to 5.0 mm, more preferably a range from 2.0 mm to 4.0 mm. Furthermore, a modulus of the coating rubber 10a of the rubber-coated belt 6 at 100% elongation may be set to a range from 4 MPa to 30 MPa, more preferably a range from 4 MPa to 20 MPa.

As illustrated in FIG. 1, the rubber-coated cord of the present embodiment comprises two steel cords, and may be a rubber-coated cord comprising only one steel cord or a rubber-coated cord comprising three or more steel cords. Furthermore, the rubber-coated belt 6 is formed in a state where the rubber-coated cord is spirally wound, but there are not any special restrictions on such a configuration, as long as a plurality of cords 10b arranged in the tire width direction A and extending along the tire circumferential direction C are coated with the coating rubber 10a. However, it is preferable that the rubber-coated belt 6 is the spiral belt formed in a state where the rubber-coated cord comprising the cord 10b coated with the coating rubber 10a is spirally wound as in the present embodiment. In this case, the circumferential belt 6a can be formed by the cord 10b that is continuous in the tire circumferential direction C without any joined portions, and hence rigidity of the tire 1 in the tire circumferential direction C (hereinafter, referred to simply as "the circumferential rigidity") can be further improved.

For the cord 10b, any known material may be used, and, for example, the above steel cord may be used. The steel cord may comprise, for example, a steel monofilament or stranded wire. Furthermore, for the cord 10b, organic fibers, carbon fibers, stranded wires of such fibers, or the like may be used.

### [Tread Rubber 7 and Side Rubber 8]

The tread rubber 7 forms an outer surface of the tread portion 1a in the tire radial direction B (hereinafter, referred to as "the tread outer surface"), and in the tread outer surface of the present embodiment, a tread pattern including a circumferential groove 7a extending in the tire circumferential direction C (see FIG. 1 or the like), a non-illustrated width direction groove extending in the tire width direction A and the like is formed. The side rubber 8 forms an outer surface of the sidewall portion 1b in the tire width direction A, and is formed integrally with the tread rubber 7.

### [Inner Liner 9]

The inner liner 9 is stacked on an inner surface of the carcass 4, and is made of a butyl-based rubber having a low air permeability in the present embodiment. Note that the butyl-based rubber means butyl rubber, and its derivative, such as halogenated butyl rubber.

### [Cushion Material 11]

The cushion material 11 is interposed between the circumferential belt 6a as the rubber-coated belt 6 and the resin annular body 5a as the resin layer 5. Specifically, the cushion material 11 is interposed in at least a space between an outer end of one of the circumferential belt 6a as the rubber-coated belt 6 and the resin annular body 5a as the resin layer 5 in the tire width direction A (the outer end of the circumferential belt 6a in the tire width direction A in the present embodiment) and the other one (the resin annular body 5a in the present embodiment).

The cushion material 11 has an elastic modulus smaller than that of the coating rubber 10a of the rubber-coated cord in the rubber-coated belt 6. "The elastic modulus" described herein means a tensile elastic modulus as described above. A modulus of the cushion material 11 at 100% elongation may be set to a range from 2 MPa to 4 MPa. The cushion material 11 of the present embodiment is made of the rubber, and may be made of a resin.

Therefore, the elastic modulus decreases from the resin layer 5, the coating rubber 10a and the cushion material 11 in this order. The resin layer 5, the coating rubber 10a and the cushion material 11 have the elastic modulus in the above relation. Thus, regardless of a positional relation, in the tire width direction A, between the outer end of the resin layer 5 in the tire width direction A and the outer end of the rubber-coated belt 6 in the tire width direction A, a force applied from the outer end of one of the resin layer 5 and the rubber-coated belt 6 in the tire width direction A toward the other one of the resin layer 5 and the rubber-coated belt 6 can be distributed by the cushion material 11. Consequently, the outer end of one of the resin layer 5 and the rubber-coated belt 6 in the tire width direction A can inhibit distortion from being concentrated on the other one of the resin layer 5 and the rubber-coated belt 6, and durability of the tire 1 can be improved.

Note that in the present embodiment, a length of the resin layer 5 in the tire width direction A is larger than a length of the rubber-coated belt 6 in the tire width direction A. Furthermore, the outer end of the resin layer 5 in the tire width direction A is located, in the tire width direction A, outside the outer end of the rubber-coated belt 6 in the tire width direction A. In other words, the resin layer 5 of the present embodiment extends to an outer side of the rubber-coated belt 6 in the tire width direction A. The cushion material 11 of the present embodiment is located between the outer end of the circumferential belt 6a as the rubber-coated belt 6 in the tire width direction A and the resin annular body 5a as the resin layer 5. Therefore, according to the cushion material 11 of the present embodiment, the outer end of the circumferential belt 6a as the rubber-coated belt 6 in the tire width direction A can inhibit the resin annular body 5a as the resin layer 5 from being damaged.

Here, in the rubber-coated belt 6, the coating rubber 10a is only interposed between the cords 10b. Therefore, in the circumferential belt 6a as the rubber-coated belt 6 including the cord 10b extending along the tire circumferential direction C, rigidity in the tire width direction A (hereinafter, referred to simply as "the width direction rigidity") is small. On the other hand, in the present embodiment, in an entire area of the circumferential belt 6a as the rubber-coated belt 6 in the tire width direction A, the resin layer 5 is superimposed in the tire radial direction B. Furthermore, the coating rubber 10a of the circumferential belt 6a as the rubber-coated belt 6 has an inner area in the tire width direction A that is directly joined to the resin layer 5 by welding or the like. Furthermore, the coating rubber 10a of the circumferential belt 6a as the rubber-coated belt 6 has opposite outer areas in the tire width direction A that are indirectly joined to the resin layer 5 by welding or the like, in a state where the cushion material 11 is interposed between the areas and the resin layer 5. Consequently, in the entire area of the circumferential belt 6a as the rubber-coated belt 6 in the tire width direction A, the width direction rigidity of the circumferential belt 6a as the rubber-coated belt 6 can be reinforced with the resin layer 5.

Furthermore, the cushion material 11 of the present embodiment has a thickness in the tire radial direction B that gradually increases from an inner side toward an outer side in the tire width direction A. More specifically, the thickness of the cushion material 11 of the present embodiment in the tire radial direction B gradually decreases from a position of the outer end of the rubber-coated belt 6 in the tire width direction A toward the inner side in the tire width direction A. According to this configuration, cushion performance of the cushion material 11 in the tire radial direction B can be set in accordance with distribution in the tire width direction A of an external force applied to the resin layer 5 in the tire radial direction B. That is, at the position of the outer end of the rubber-coated belt 6 in the tire width direction A, the external force applied to the resin layer 5 in the tire radial direction B is large, but the external force applied to the resin layer 5 in the tire radial direction B gradually decreases from the position of the outer end of the rubber-coated belt 6 in the tire width direction A toward the inner side in the tire width direction A. Therefore, the cushion material 11 formed in the above shape can achieve the cushion performance in correspondence with the distribution in the tire width direction A of the external force applied to the resin layer 5 in the tire radial direction B.

Hereinafter, description will be made as to the tire 1 of the present embodiment in more detail.

As described above, the resin layer 5 of the present embodiment is constituted of the resin annular body 5a extending continuously over the entire area in the tire circumferential direction C. By use of the resin annular body 5a, the circumferential rigidity of the tire 1 can be improved, and deformation of the tire 1 can be inhibited. For example, separation of the rubber-coated belt 6 from the resin annular body 5a as the resin layer 5 can be inhibited. Consequently, the durability of the tire 1 can be further improved.

Additionally, the resin annular body 5a of the present embodiment comprises reduced-diameter portions 13 and 14 having a diameter reduced so that the portions come close to the inner side in the tire radial direction, toward the outer side in the tire width direction A, at the end portions including the outer ends in the tire width direction A. Furthermore, the reduced-diameter portions 13 and 14 of the end portions of the resin annular body 5a in the tire width direction A extend to outer sides of the tread edges TE in the tire width direction A. In a case where the reduced-diameter portions 13 and 14 are provided, as compared with a case where the resin annular body has uniform inner and outer diameters without being provided with the reduced-diameter portions 13 and 14, a ground contact pressure is inhibited from being locally increased at positions near the tread edges TE, and uneven wear on the tread outer surface can be inhibited. Furthermore, distortion can be inhibited from being concentrated on the end portions of the resin annular body 5a in the tire width direction A. Consequently, damages such as cracks can be inhibited from being generated in the end portions of the resin annular body 5a in the tire width direction A. That is, the durability of the tire 1 can be further improved.

Furthermore, the circumferential belt 6a as the rubber-coated belt 6 extends in the tire width direction A, over an area between the reduced-diameter portions 13 and 14 in the opposite end portions of the resin annular body 5a in the tire width direction A. Additionally, the cushion material 11 of the present embodiment is interposed in at least a space between the outer end of the rubber-coated belt 6 in the tire width direction A and the reduced-diameter portions 13 and 14 of the resin annular body 5a. This configuration can further inhibit distortion from being concentrated on the end portions of the resin annular body 5a in the tire width direction A. This can further inhibit the damages, such as the cracks, from being generated in the end portions of the resin annular body 5a in the tire width direction A. That is, the durability of the tire 1 can be further improved.

The resin layer 5 of the present embodiment is located inside the rubber-coated belt 6 in the tire radial direction B, and may be a resin layer located outside the rubber-coated belt 6 in the tire radial direction B. However, it is preferable that the resin annular body 5a as the resin layer 5 is located inside the circumferential belt 6a as the rubber-coated belt 6 in the tire radial direction B, as in the present embodiment. In such an arrangement, a distance from the tread outer surface to the resin layer 5 is easy to be acquired, and an excessive external force can be inhibited from being applied to the end portions of the resin annular body 5a in the tire width direction A. This can further inhibit the damages, such as the cracks, from being generated in the end portions of the resin annular body 5a in the tire width direction A. That is, the durability of the tire 1 can be further improved.

Note that the reduced-diameter portions 13 and 14 of the resin annular body 5a have the diameter reduced along the carcass 4, in cross-sectional view parallel to the tire width direction A. More specifically, an outer surface of each of the reduced-diameter portions 13 and 14 of the present embodiment in the tire radial direction B is constituted of a curved surface that protrudes to the outer side in the tire radial direction B, in the cross-sectional view parallel to the tire width direction A. Thus, the outer surfaces of the reduced-diameter portions 13 and 14 are constituted of the above curved surfaces, so that local variations in the ground contact pressure can be further suppressed at the positions near the tread edges TE.

The pneumatic tire according to the present disclosure is not limited to specific configurations illustrated in the above embodiment and modification, and can be variously modified and changed without departing from the scope of claims.

### INDUSTRIAL APPLICABILITY

The present disclosure relates to a pneumatic tire.

### REFERENCE SIGNS LIST

- 1: pneumatic tire
- 1a: tread portion
- 1b: sidewall portion
- 1c: bead portion
- 3: bead member
- 3a: bead core
- 3b: bead filler
- 4: carcass
- 4a: carcass ply
- 5: resin layer
- 5a: resin annular body
- 6: rubber-coated belt
- 6a: circumferential belt
- 7: tread rubber
- 7a: circumferential groove
- 8: side rubber
- 9: inner liner
- 10a: coating rubber
- 10b: cord
- 11: cushion material
- 13 and 14: reduced-diameter portion
- A: tire width direction
- B: tire radial direction
- C: tire circumferential direction
- CL: tire equatorial plane
- TE: tread edge

## Claims

1. A pneumatic tire comprising an annular rubber-coated belt including a cord and a coating rubber with which the cord is coated,
the pneumatic tire comprising a resin layer located inside or outside the rubber-coated belt in a tire radial direction, and having an elastic modulus larger than an elastic modulus of the coating rubber, and
a cushion material interposed in at least a space between an outer end of one of the rubber-coated belt and the resin layer in a tire width direction and the other one of the rubber-coated belt and the resin layer, and having an elastic modulus smaller than the elastic modulus of the coating rubber.

2. The pneumatic tire according to claim 1, wherein the resin layer is constituted of a resin annular body extending continuously over an entire area in a tire circumferential direction.

3. The pneumatic tire according to claim 1 or 2, wherein the resin layer is located inside the rubber-coated belt in the tire radial direction.

4. The pneumatic tire according to claim 3, wherein the resin annular body comprises a reduced-diameter portion having a diameter reduced so that the reduced-diameter portion comes close to an inner side in the tire radial direction, toward an outer side in the tire width direction, in an end portion including an outer end in the tire width direction, and
the cushion material is interposed in at least a space between the outer end of the rubber-coated belt in the tire width direction and the reduced-diameter portion of the resin annular body.

5. The pneumatic tire according to any one of claims 1 to 4,
wherein the rubber-coated belt is formed in a state where a rubber-coated cord comprising the cord coated with the coating rubber is spirally wound.

6. The pneumatic tire according to any one of claims 1 to 5, wherein the resin layer extends to an outer side of the rubber-coated belt in the tire width direction.

7. The pneumatic tire according to any one of claims 1 to 6, wherein the cushion material has a thickness in the tire radial direction that gradually increases from an inner side toward an outer side in the tire width direction.
